# EUROPÄISCHE PATENTANMELDUNG

(11) **EP 4 843 756 A1**
(43) Veröffentlichungstag der Anmeldung: **25.11.2026**
(21) Anmeldenummer: 25178296.7
(22) Anmeldetag: 22.05.2025
(51) Int. Cl.: B29C 65/22, B29C 65/30, B29C 65/00, H05B 3/00, H05B 3/12

(54) **WIDERSTANDSHEIZBAND ZUM VERSCHWEISSEN VON KUNSTSTOFFFOLIEN**

(71) Anmelder: ROPEX Industrie-Elektronik GmbH, 74321 Bietigheim-Bissingen (DE)
(72) Erfinder: Schuller, Manuel, 74321 Bietigheim-Bissingen (DE)
(74) Vertreter: Patentanwälte Magenbauer & Kollegen Partnerschaft mbB

(57) **Zusammenfassung**

Die Erfindung betrifft ein Widerstandsheizband (21; 71) zum Verschweißen von Kunststoffteilen oder Kunststofffolien, mit einem elektrisch leitfähigen Schweißband (22; 72), das an einer Unterseite für einen flächigen Kontakt mit einer Kunststofffolie ausgebildet ist und das an einer der Unterseite (23; 73) abgewandten Oberseite (24; 74) von einem ersten Kontaktabschnitt (32; 82) eines elektrisch leitfähigen ersten Kontaktbands (31; 81) und von einem zweiten Kontaktabschnitt (52; 92) eines elektrisch leitfähigen zweiten Kontaktbands (51; 91) zumindest nahezu vollständig überdeckt ist, wobei eine erste Kontaktfahne (33; 83) des ersten Kontaktbands (31; 81) und eine erste Kontaktfahne (53; 93) des zweiten Kontaktbands (51; 91) in einer der Unterseite (23; 73) abgewandten Raumrichtung von der Oberseite (24; 74) abragen und flächig aneinander anliegen.

## Beschreibung

Die Erfindung betrifft ein Widerstandsheizband zum Verschweißen von Kunststoffteilen, insbesondere Kunststofffolien.

Die Anmelderin vertreibt unter der Bezeichnung RESISTRON eine Vielzahl von Schweißwerkzeugen, die für das elektrische Widerstandsschweißen von Kunststofffolien ausgebildet ist und die als gerade Schweißschienen, als Konturschweißwerkzeuge für ebene Schweißnähte oder als Schweißwerkzeuge für dreidimensionale Konturen ausgebildet sein können. Die Schweißwerkzeuge umfassen stets einen formstabilen Grundkörper, der an einer Stirnfläche mit einem Widerstandsheizband ausgerüstet wird, wobei das Widerstandsheizband für die Durchführung des gewünschten Schweißvorgangs mit einem Temperaturregler verbunden wird, der zur Bereitstellung von elektrischen Strom an das Widerstandsheizband ausgebildet ist, um die gewünschte Temperierung des Widerstandsheizbands hervorzurufen.

Die Aufgabe der Erfindung besteht darin, ein Widerstandsheizband mit verbesserten Schweißeigenschaften zur Verfügung zu stellen.

Diese Aufgabe wird für ein Widerstandsheizband der eingangs genannten Art dadurch gelöst, dass das Widerstandsheizband ein elektrisch leitfähiges Schweißband umfasst, das an einer Unterseite für einen flächigen Kontakt mit einer Kunststofffolie ausgebildet ist, wobei das Schweißband an einer der Unterseite abgewandten Oberseite von einem ersten Kontaktabschnitt eines elektrisch leitfähigen ersten Kontaktbands und von einem zweiten Kontaktabschnitt eines elektrisch leitfähigen zweiten Kontaktbands zumindest nahezu vollständig überdeckt ist und wobei eine erste Kontaktfahne des ersten Kontaktbands und eine erste Kontaktfahne des zweiten Kontaktbands in einer der Unterseite abgewandten Raumrichtung von der Oberseite abragen und flächig aneinander anliegen.

Das elektrisch leitfähige Schweißband ist diejenige Komponente des Widerstandsheizbands, die in direktem körperlichen Kontakt mit der wenigstens einen Kunststofffolie steht, die im Zuge des Schweißverfahrens so weit erwärmt werden soll, dass sie in einen plastischen Zustand gelangt, in dem eine stoffschlüssige Verbindung mit einer weiteren Kunststofffolie bewirkt werden kann. Um eine Schweißnaht zwischen den wenigstens zwei Kunststofffolien oder Kunststoffteilen, insbesondere auch zwischen einer Kunststofffolie und einem Spritzgussteil wie einem Ausgießer erzeugen zu können, die sowohl in technischer Hinsicht als auch in optischer Hinsicht geeignet ist, vorgegebene Qualitätsanforderungen zu erfüllen, ist davon auszugehen, dass eine Geometrie der Unterseite des Schweißbands vollständig als Schweißnaht in der Kunststofffolien abgebildet wird. Hierzu ist eine möglichst gleichförmige Wärmeverteilung über die gesamte Unterseite des Schweißbands erforderlich, wobei diese Wärmeverteilung ganz erheblich von der elektrischen Stromdichte im Schweißband abhängig ist. Selbst für den Fall, dass das Schweißband über seine gesamte Erstreckung stets die gleiche Breite und Dicke aufweist, können insbesondere in denjenigen Bereichen des Schweißbands, in denen eine elektrische Kontaktierung vorgenommen wird, lokale Inhomogenitäten bezüglich der Stromdichte und der daraus resultierenden Wärmeverteilung auftreten.

Typischerweise ist die Unterseite des Schweißbands eben ausgebildet, sodass auch die Oberseite des Schweißbands in einer Ebene angeordnet ist, die parallel zu einer Ebene angeordnet ist, die durch die Unterseite des Schweißbands bestimmt wird. Alternativ kann auch vorgesehen sein, dass das Schweißband eine 3-dimensionale Gestaltung aufweist, bei der die Oberseite und die Unterseite entsprechend einer gekrümmten Fläche ausgebildet sind.

Die Zielsetzung der Erfindung besteht darin, auch in denjenigen Bereichen, in denen eine elektrische Kontaktierung des Schweißbands vorgesehen ist, eine möglichst gleichförmige Stromdichte sowie eine daraus resultierende homogenen Wärmeverteilung zu gewährleisten. Dies wird erfindungsgemäß dadurch erreicht, dass eine Stromzufuhr über ein erstes Kontaktband und ein zweites Kontaktband vorgenommen wird, die eine Oberseite des Schweißbands zumindest nahezu vollständig, insbesondere vollständig, überdecken.

Vorzugsweise ist vorgesehen, dass die Überdeckung der Oberseite des Schweißbands durch das erste Kontaktband und das zweite Kontaktband mehr als 95 Prozent, besonders bevorzugt mehr als 97 Prozent, insbesondere mehr als 99 Prozent, einer Oberfläche der Oberseite beträgt. Ferner ist vorgesehen, dass die Unterseite und die Oberseite des Schweißbands geometrisch ähnlich, vorzugsweise geometrisch identisch ausgebildet sind. Hierbei ist zu berücksichtigen, dass das Widerstandsheizband typischerweise als Blechteil ausgebildet ist und durch einen Schneidprozess, insbesondere durch Wasserstrahlschneiden oder Laserschneiden, konturiert wird. Hierbei wird eine Blechdicke gewählt, die erheblich kleiner, insbesondere um einen Faktor 10 bis 1000 kleiner, als eine Länge und Breite des Widerstandsheizbands ist. Exemplarisch kann vorgesehen werden, dass das Widerstandsheizband eine Breite von 2 mm bis 20 mm und eine Länge von 10 mm bis 1000 mm aufweist und dabei eine Blechdicke von 0,1 mm bis 2 mm aufweist. Geometrische Abweichungen zwischen der Oberseite und der Unterseite des Schweißbands sind daher gering und allenfalls auf das gewählte Trennverfahren zur Herstellung des Schweißbands zurückzuführen.

Bevorzugt ist vorgesehen, dass der erste Kontaktabschnitt des ersten Kontaktbands und der zweite Kontaktabschnitt des zweiten Kontaktbands flächig an der Oberseite des Schweißbands anliegen und damit eine großflächige Übertragung der Wärme gewährleisten. Um eine gleichmäßige Wärmeerzeugung im Schweißband sicherzustellen, ist das erste Kontaktband nah am ersten Kontaktabschnitt sowie das zweite Kontaktband nah am zweiten Kontaktabschnitt mechanisch und elektrisch mit dem Schweißband verbunden. Bevorzugt wird die Verbindung durch mehrere Punktschweißungen hergestellt.

Um eine zuverlässige Einkopplung und Auskopplung des elektrischen Stroms in das erste Kontaktband und das zweite Kontaktband sicherzustellen, ist das erste Kontaktband angrenzend an den ersten Kontaktabschnitt mit einer ersten Kontaktfahne versehen und das zweite Kontaktband ist angrenzend an den zweiten Kontaktabschnitt mit einer ersten Kontaktfahne versehen. Die beiden Kontaktfahnen ragen von der Oberseite des Schweißbands in einer Raumrichtung ab, die der Unterseite des Schweißbands entgegengesetzt ist, vorzugsweise ist vorgesehen, dass die beiden Kontaktfahne in einem rechten Winkel zur Oberseite des Schweißbands ausgerichtet sind. Ferner ist vorgesehen, dass die beiden Kontaktfahnen mit einander zugewandten Innenflächen flächig aneinander liegen. Ferner sind der erste Kontaktabschnitt und der zweite Kontaktabschnitt derart am Schweißband angeordnet, dass sich der erste Kontaktabschnitt längs der Oberfläche des Schweißbands in einer ersten Raumrichtung erstreckt und dass sich der zweite Kontaktabschnitt längs der Oberfläche des Schweißbands in einer zweiten Raumrichtung erstreckt, die von der ersten Raumrichtung abweicht, insbesondere der ersten Raumrichtung entgegengesetzt ist.

Vorteilhafte Weiterbildungen der Erfindung sind Gegenstand der Unteransprüche.

Zweckmäßig ist es, wenn die erste Kontaktfahne und eine zweite Kontaktfahne des ersten Kontaktbands jeweils an einander entgegengesetzten Enden des ersten Kontaktabschnitts ausgebildet sind und dass die erste Kontaktfahne und eine zweite Kontaktfahne des zweiten Kontaktbands jeweils an einander entgegengesetzten Enden des zweiten Kontaktabschnitts ausgebildet sind. Die Kontaktfahnen dienen einer zuverlässigen mechanischen und elektrischen Ankopplung des jeweiligen Kontaktbands an elektrische Anschlussblöcke, an denen der elektrische Strom für die Erwärmung des Schweißbands zur Verfügung gestellt wird. Bevorzugt ist vorgesehen, dass die Kontaktfahnen zumindest in der unmittelbaren Nähe des Schweißbandes im Wesentlichen die gleiche Breite, insbesondere die gleiche Breite, wie der sich jeweils daran anschließende Kontaktabschnitt aufweisen. Hierdurch soll gewährleistet werden, dass am Übergang zwischen Kontaktfahne und Kontaktabschnitt keine unerwünschte Beeinflussung der Stromdichte, die einen Einfluss auf die lokale Temperatur des jeweiligen Kontaktabschnitts an dieser Übergangstelle haben könnte, auftritt. In thermisch vom Schweißband entkoppelten Bereichen, insbesondere nahe der elektrischen Anschlussblöcke des Schweißwerkzeugs, mit denen eine elektrische Verbindung zwischen dem Schweißband und dem Schweißwerkzeug hergestellt wird, ist typischerweise vorgesehen, dass die Kontaktfahnen erheblich breiter ausgeführt sind als das Schweißband um elektrische Verluste zu minimieren.

Bevorzugt ist vorgesehen, dass die erste Kontaktfahne des ersten Kontaktbands einstückig und abgewinkelt am ersten Kontaktabschnitt ausgebildet ist und dass die erste Kontaktfahne des zweiten Kontaktbands einstückig und abgewinkelt am zweiten Kontaktabschnitt ausgebildet ist. Durch die einstückige Ausgestaltung zwischen erster Kontaktfahne und erstem Kontaktband beziehungsweise zwischen der ersten Kontaktfahne und dem zweitem Kontaktband wird jeweils ein störungsfreier Stromfluss zwischen der Kontaktfahne und dem Kontaktband gewährleistet. Die Abwinklung zwischen der jeweiligen Kontaktfahne und dem jeweiligen Kontaktband erfolgt vorzugsweise als plastische Deformation (Abkantvorgang) an einem Rohteil, das in einem vorausgegangenen Trennprozess, beispielsweise Laserschneiden oder Wasserstrahlschneiden, aus einem ebenen Blechteil herausgetrennt wurde. Die jeweils zweite Kontaktfahne des ersten Kontaktbands und des zweiten Kontaktbands kann entweder in gleicher Weise wie die erste Kontaktfahne abgewinkelt werden oder alternativ ohne plastische Deformation in der gleichen Ebene wie der jeweilige Kontaktabschnitt angeordnet sein.

Vorteilhaft ist es, wenn die erste Kontaktfahne des ersten Kontaktbands und die erste Kontaktfahne des zweiten Kontaktbands eine Einleitungsstelle für das Schweißband bestimmen, dass die zweite Kontaktfahne des ersten Kontaktbands eine erste Ausleitungsstelle bestimmt, dass die zweite Kontaktfahne des zweiten Kontaktbands eine zweite Ausleitungsstelle bestimmt und dass ein erster elektrischer Widerstand zwischen der Einleitungsstelle und der ersten Ausleitungsstelle einem zweiten elektrischen Widerstand zwischen der Einleitungsstelle und der zweiten Ausleitungsstelle gleicht. Hierbei dienen die Begriffe Einleitungsstelle und Ausleitungsstelle lediglich zur Unterscheidung der örtlichen Anordnung der jeweiligen Kontaktfahne und sind bezüglich eines Stromflusses nicht als beschränken anzusehen, zumal wahlweise eine Stromversorgung mit Gleichstrom oder mit Wechselstrom vorgesehen sein kann. Vielmehr ist entscheidend, dass das erste Kontaktband und das zweite Kontaktband derart gestaltet sind, dass ein erster elektrischer Widerstand zwischen der ersten Kontaktfahne und der zweiten Kontaktfahne des ersten Kontaktbands und ein zweiter elektrischer Widerstand zwischen der ersten Kontaktfahne und der zweiten Kontaktfahne des zweiten Kontaktbands einen Unterschied von weniger als 5 Prozent, vorzugsweise von weniger als 3 Prozent, insbesondere von weniger als 1 Prozent, aufweisen. Hierdurch wird eine möglichst homogene Erwärmung des Schweißbands an jeder Stelle der Unterseite erzielt. Bevorzugt ist hierbei vorgesehen, dass sowohl der Kontaktabschnitt als auch das Schweißband über die gesamte Länge der Schweißband zu erzeugenden Schweißnaht an jeder Stelle den gleichen ohmschen Widerstand aufweisen, um Temperaturunterschiede im Schweißband, die zu einer ungleichmäßigen Schweißnaht führen könnten, zu vermeiden.

Bei einer Weiterbildung der Erfindung ist vorgesehen, dass das Schweißband ringförmig ausgebildet ist, dass der erste Kontaktabschnitt als erster Ringabschnitt ausgebildet ist und dass der zweite Kontaktabschnitt als zweiter Ringabschnitt ausgebildet ist. Bei einer ringförmigen Gestaltung des Schweißbands weist das Schweißband keinen Anfang und kein Ende auf, sondern kann vielmehr als endlos umlaufend bezeichnet werden. Hierbei tritt die Problemstellung auf, dass wenigstens zwei Kontaktstellen für das Anlegen einer elektrischen Spannung an das Schweißband erforderlich sind, wobei an diesen Kontaktstellen eine höhere Stromdichte verglichen mit anderen Stellen des Schweißbands vermieden werden muss, um lokale Überhitzungen des Schweißbands zu verhindern. Vorzugsweise ist vorgesehen, dass eine erste Längenerstreckung des ersten Ringabschnitts mit einer ersten Längenerstreckung des zweiten Ringabschnitts übereinstimmt. Sofern das Schweißband rein exemplarisch als Kreisring ausgebildet ist, kann jeder der beiden Ringabschnitte als Halbkreis ausgeführt werden.

In weiterer Ausgestaltung der Erfindung ist vorgesehen, dass die zweite Kontaktfahne des ersten Kontaktbands und die zweite Kontaktfahne des zweiten Kontaktbands in einer der Unterseite abgewandten Raumrichtung von der Oberseite abragen und flächig aneinander anliegen. Diese Anordnung der zweiten Kontaktfahne des ersten und des zweiten Kontaktbands ist bei einer ringförmigen Ausgestaltung des Schweißbands vorteilhaft. Dies gilt insbesondere für den Fall, dass das Schweißband kreisringförmig ausgebildet ist und die beiden Kontaktabschnitte jeweils halbkreisförmig gestaltet sind.

Zweckmäßig ist es, wenn das Schweißband einen ersten Endbereich und einen beabstandet vom ersten Endbereich angeordneten zweiten Endbereich aufweist und dass die erste Ausleitungsstelle mit der zweiten Kontaktfahne des ersten Kontaktbands dem ersten Endbereich zugeordnet ist, insbesondere rechtwinklig vom ersten Endbereich abragt, und dass die zweite Ausleitungsstelle mit der zweiten Kontaktfahne des zweiten Kontaktbands dem zweiten Endbereich zugeordnet ist, insbesondere rechtwinklig vom zweiten Endbereich abragt. Eine derartige Ausgestaltung der beiden Kontaktbänder ist vorteilhaft, wenn das Schweißband nicht ringförmig ausgebildet ist und damit zwei beabstandet voneinander angeordnete Endbereiche aufweist. Hierbei ist das Schweißband nicht notwendigerweise als gerader Streifen ausgebildet, sondern kann auch einen in der Ebene oder in der dritten Dimension gekrümmten Verlauf aufweisen. Durch die Verwendung der beiden Kontaktbänder, die eine mittige Stromeinleitung in das Schweißband ermöglichen, kann im Vergleich zu einer elektrischen Kontaktierung des Schweißbands, die ausschließlich an den einander entgegengesetzten Endbereichen vorgesehen ist, eine symmetrische Stromeinleitung zwischen der Einleitungsstelle und den beiden Ausleitungsstelle und damit eine homogene Stromdichteverteilung entlang des gesamten Schweißbands erzielt werden.

Bevorzugt ist vorgesehen, dass eine Projektion des ersten Kontaktabschnitts und eine Projektion des zweiten Kontaktabschnitts auf eine von der Unterseite des Schweißbands bestimmte Schweißfläche einer Projektion des Schweißbands auf die Schweißfläche entspricht. Dabei kann die Unterseite des Schweißbands als ebene Fläche oder als gekrümmte Fläche ausgebildet sein, wodurch sich die Schweißfläche bestimmt, die auch derjenigen Geometrie entspricht, die nach Durchführung des Schweißvorgangs in den Kunststofffolien als Schweißnaht zu erkennen ist. Projiziert man das Schweißband auf diese Schweißfläche, so ergibt sich eine zumindest nahezu vollständige Überdeckung zwischen der Schweißfläche und der Projektion des Schweißbands. In gleicher Weise gilt dies für eine Projektion des ersten Kontaktabschnitts und des zweiten Kontaktabschnitts auf die Schweißfläche, wobei davon ausgegangen, dass sowohl für das Schweißband als auch für die beiden Kontaktabschnitte die gleiche Projektionsweise eingesetzt wird.

Bei einer vorteilhaften Weiterbildung der Erfindung ist vorgesehen, dass das Schweißband, das erste Kontaktband und das zweite Kontaktband aus Edelstahl, insbesondere mit einer elektrischen Leitfähigkeit von 1,4*10⁶ S/m (1,4 E6 S/m), hergestellt sind und dass die erste Kontaktfahne des ersten Kontaktbands und die erste Kontaktfahne des zweiten Kontaktbands zumindest bereichsweise mit einer Beschichtung, insbesondere einer Kupferbeschichtung, versehen sind, die eine höhere elektrische Leitfähigkeit, insbesondere 5,8*10⁷S/m (5,8 E7 S/m), als das Schweißband, der erste Kontaktabschnitt und der zweite Kontaktabschnitt aufweist. Die Verwendung von Edelstahl für das Schweißband hat den Vorteil, dass hierdurch eine robuste Gestaltung des Schweißbands bei gleichzeitig für ein Metall eher niedriger elektrischer Leitfähigkeit ermöglicht wird, sodass das Schweißband einen elektrischen Widerstand aufweist, der eine Wärmeentwicklung im Schweißband begünstigt. Vorzugsweise ist vorgesehen, dass das zur Herstellung des Schweißbands sowie der beiden Kontaktbänder verwendete Edelstahlmaterial eine elektrischen Leitfähigkeit von 1,4*10⁶ S/m (1,4 E6 S/m) aufweist. Die Aufgabe der Kontaktfahne besteht hingegen darin, einen möglichst effizienten und erwärmungsarmen Stromtransport bis zum Kontaktabschnitt zu gewährleisten. Aus diesem Grund kann vorgesehen werden, dass die einstückig mit dem Kontaktabschnitt ausgebildete Kontaktfahne zumindest bereichsweise mit einer Beschichtung versehen ist, die eine erheblich höhere elektrische Leitfähigkeit aufweist. Typischerweise ist die Beschichtung stoffschlüssig auf die Kontaktfahne aufgebracht, hierzu kommt insbesondere das galvanische Beschichtungsverfahren in Frage. Hierdurch kann die elektrische Leitfähigkeit der Kontaktfahne in einem Bereich von 5,8*10⁷S/m (5,8 E7 S/m) und damit um mehr als das Zehnfache im Vergleich zum Kontaktabschnitt und dem Schweißband gesteigert werden.

In weiterer Ausgestaltung der Erfindung ist vorgesehen, dass eine erste Innenfläche der ersten Kontaktfahne des ersten Kontaktbands und eine erste Innenfläche der ersten Kontaktfahne des zweiten Kontaktbands beschichtungsfrei ausgebildet sind. Hierdurch wird eine vorteilhafte stoffschlüssige Verbindung der beiden Kontaktfahnen im Zuge eines Punktschweißverfahrens ermöglicht, da eine unmittelbare Verbindung der beiden aus Edelstahl hergestellten Innenflächen der beiden Kontaktfahnen ohne die störende Wirkung einer Kupferbeschichtung geschaffen werden kann.

Vorteilhaft ist es, wenn der erste Kontaktabschnitt des ersten Kontaktbands und der zweite Kontaktabschnitt des zweiten Kontaktbands zumindest bereichsweise stoffschlüssig mit der Oberseite des Schweißbands verbunden sind. Hierdurch wird eine vorteilhafte elektrische Anbindung der beiden Kontaktabschnitt mit der Oberseite des Schweißbands gewährleistet, wobei die stoffschlüssige Verbindung zwischen dem Kontaktabschnitten und der Oberseite des Schweißbands vorzugsweise im elektrischen Punktschweißverfahren hergestellt.

Eine vorteilhafte Ausführungsform der Erfindung ist in der Zeichnung dargestellt. Hierbei zeigt:
- Figur 1: eine streng schematische, perspektivische Darstellung eines Schweißwerkzeugs zum Verschweißen von Kunststofffolien mit einem Grundkörper und einem daran angeordneten Widerstandsheizband,
- Figur 2: eine streng schematische, perspektivische Darstellung des Widerstandsheizbands gemäß der Figur 1,
- Figur 3: eine streng schematische, perspektivische Explosionsdarstellung des Widerstandsheizbands gemäß den Figuren 1 und 2, und
- Figur 4: eine zweite Ausführungsform eines Widerstandsheizband in einer streng schematischen Darstellung.

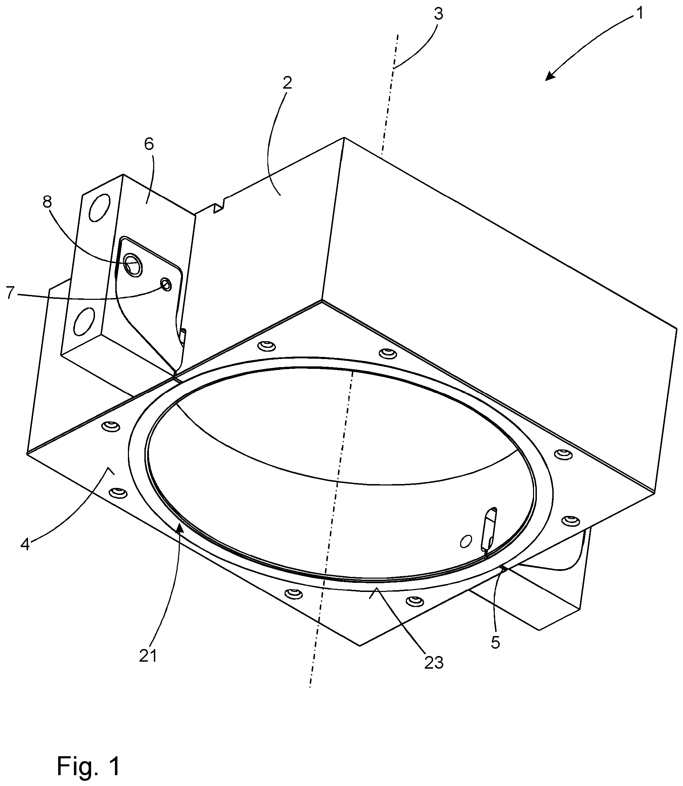

Ein in der Figur 1 in einer streng schematischen, Perspektiven Darstellung gezeigtes Schweißwerkzeug 1 ist zur Verwendung in einer nicht dargestellten Schweißeinrichtung vorgesehen, mit der ebenfalls nicht dargestellte Kunststofffolien bereichsweise unter Verwendung von Wärmeenergie stoffschlüssig miteinander verbunden werden, was als Kunststoff-Schweißvorgang bezeichnet wird. Das Schweißwerkzeug 1 umfasst einen Grundkörper 2, der beispielsweise aus einem Metallmaterial wie Aluminium hergestellt ist und der zur Festlegung an einem nicht dargestellten Aktor der Schweißeinrichtung vorgesehen ist. Mit dem Aktor kann eine Annäherungsbewegung und eine Entfernungsbewegung des Schweißwerkzeugs 1 längs einer Bewegungsachse 3 bewirkt werden, um das Schweißwerkzeug 1 derart an eine nicht dargestellte Gegenlage, die ebenfalls Bestandteil der nicht dargestellten Schweißeinrichtung ist, anzunähern bzw. zu entfernen. Hierbei wird ein Abstand zwischen einer der nicht dargestellten Gegenlage und einer Stirnfläche 4 als größenvariabler Schweißspalt bezeichnet. In diesen Schweißspalt werden wenigstens zwei übereinander angeordnete Kunststofffolien eingebracht und durch eine Kombination einer Annäherungsbewegung des Schweißwerkzeugs 1 an die Gegenlage und eine Erwärmung des am Grundkörper 2 angebrachten Widerstandsheizbands 21 derart komprimiert und erwärmt, dass die gewünschte stoffschlüssig Verbindung zwischen den beiden Kunststofffolien erzielt wird.

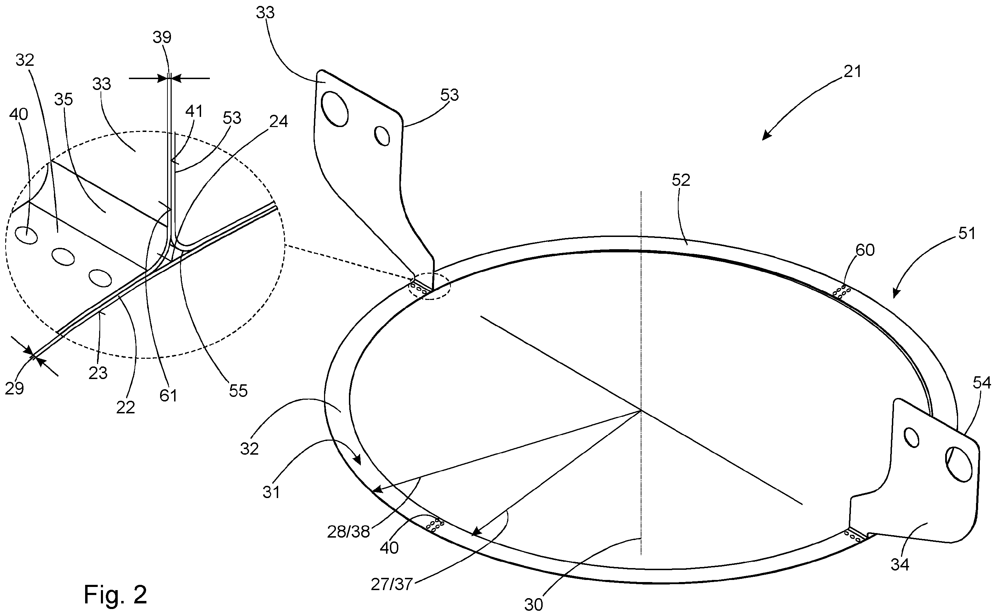

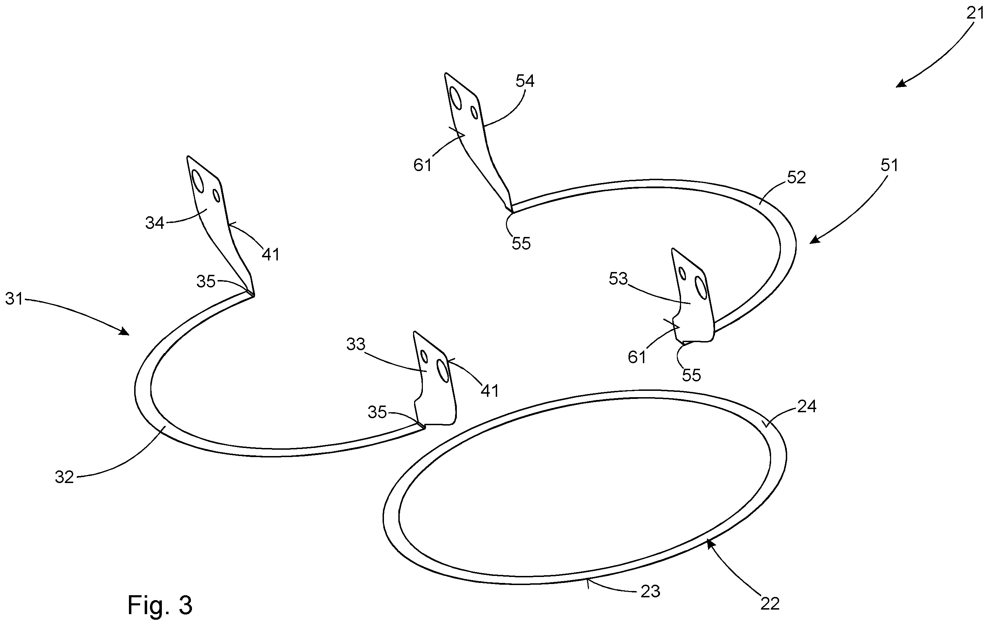

Hierzu ist das in den Figuren 2 und 3 näher dargestellte Widerstandsheizband 21 elektrisch mit zwei Anschlussblöcken 6 verbunden, wobei in der Darstellung der Figur 1 nur eine der beiden Anschlussblöcke 6 teilweise sichtbar ist. Jede der Anschlussblöcke 6 ist über eine nicht dargestellte Anschlussleitung mit einer ebenfalls nicht dargestellten Stromquelle verbunden. Hierzu wird das Widerstandsheizband 21 mit einer nicht dargestellten Schraube, die eine Durchgangsbohrung im Widerstandsheizband 21 durchsetzt und in eine Gewindebohrung 8 im jeweiligen Anschlussblock 6 eingeschraubt wird, an den Anschlussblock 6 angepresst. Ferner weist das Widerstandsheizband 21 eine weitere Durchgangsbohrung auf, durch die eine nicht dargestellte Schraube in eine Gewindebohrung 7 im jeweiligen Anschlussblock 6 eingeschraubt werden kann, um das Widerstandsheizband 21 über nicht dargestellte Messleitungen elektrisch mit einer nicht dargestellten Steuerung zu verbinden. Hiermit kann die Steuerung einen Innenwiderstand und damit eine Temperatur des Widerstandsheizbands 21 ermitteln. Um eine elektrische Isolation zwischen dem aus Metall hergestellten Grundkörper 2 und dem Widerstandsheizband 21 zu gewährleisten, sind diejenigen Oberflächen des Grundkörpers 2, die in unmittelbaren mechanischen Kontakt mit dem Widerstandsheizband 21 gelangen können, in nicht näher dargestellter Weise mit einer elektrischen Isolationsschicht versehen, dies kann beispielsweise durch Abschnitte eines selbstklebenden Glasfasergewebebands verwirklicht werden. Dies gilt insbesondere für diejenigen Bereiche des Widerstandsheizbands 21, die in den Aufnahmeschlitzen 5 des Grundkörpers 2 aufgenommen sind.

Wie der Darstellung der Figur 2 entnommen werden kann, ist ein rein exemplarisch kreisringförmig ausgebildetes Schweißband 22 des Widerstandsheizbands 21 mit einer Oberseite 24 gegenüberliegend zu der rein exemplarisch eben ausgebildeten Stirnfläche 4 des Grundkörpers 2 angeordnet. Eine ebenfalls kreisringförmige Unterseite 23 des Schweißbands 22 dient als Kontaktfläche für eine unmittelbare Auflage auf der nicht dargestellten Kunststofffolie und wird auch als Schweißfläche bezeichnet. Wie den Darstellungen der Figuren 2 und 3 entnommen werden kann, sind zwischen der Oberseite 24 des Schweißbands 22 und der Stirnfläche 4 des Grundkörpers 2 ein erster Kontaktabschnitt 32 eines ersten Kontaktbands 31 sowie ein zweiter Kontaktabschnitt 52 eines zweiten Kontaktbands 51 angeordnet.

Die Aufgabe des ersten Kontaktbands 31 sowie des zweiten Kontaktbands 51 besteht darin, eine Stromversorgung für das Schweißband 22 mit einer möglichst homogenen Stromdichte über die gesamte Erstreckung des Schweißbands 22 zu ermöglichen. Die nachstehende Beschreibung für das erste Kontaktband 31 trifft in identischer Weise auch für das zweite Kontaktband 51 zu, sodass hier auf eine neuerliche Beschreibung der Eigenschaften des zweiten Kontaktbands 51 verzichtet wird.

Das erste Kontaktband 31 weist einen kreisringabschnittsförmig ausgebildeten ersten Kontaktabschnitt 32 auf, der sich nahezu über einen Winkel von 180 Grad bezogen auf eine Mittelachse 30 des Widerstandsheizbands 21 erstreckt. Hierbei ist vorgesehen, dass ein Innendurchmesser 37 des ersten Kontaktabschnitts 32 und ein Außendurchmesser 38 des ersten Kontaktabschnitts 32 zumindest nahezu, insbesondere vollständig, identisch zum Innendurchmesser 27 bzw. zum Außendurchmesser 28 des Schweißbands 22 sind.

Ferner ist rein exemplarisch vorgesehen, dass sich eine Gesamtdicke des Widerstandsheizbands 21 im Bereich des Schweißbands 22 aus einer Materialstärke 29 des Schweißbands 22 und einer Materialstärke 39 des ersten Kontaktabschnitts 32 zusammensetzt, wie dies insbesondere aus der Detaildarstellung zur Figur 2 zu entnehmen ist. Beispielhaft ist vorgesehen, dass sowohl das Schweißband 22 als auch das erste Kontaktband 31 aus dem gleichen Edelstahl-Blechmaterial ausgeschnitten sind und somit die gleiche Materialstärke 29, 39 aufweisen.

Wie der Detaildarstellung der Figur 2 weiter entnommen werden kann, ist die erste Kontaktfahne 33 einstückig mit dem ersten Kontaktabschnitt 32 ausgebildet und in einem Biegebereich 35 rein exemplarisch um 90 Grad gegenüber dem ersten Kontaktabschnitt 32 abgewinkelt. In gleicher Weise gilt dies für die nicht in einer Detaildarstellungen gezeigte zweite Kontaktfahne 34.

Der Detaildarstellung der Figur 2 ist zudem zu entnehmen, dass eine der ersten Kontaktfahne 53 des zweiten Kontaktbands 51 zugewandte erste Innenfläche 41 der ersten Kontaktfahne 33 des ersten Kontaktbands 31 und eine der ersten Kontaktfahne 33 zugewandte erste Innenfläche 61 der ersten Kontaktfahne 53 jeweils flächig aneinander liegen. In der Praxis ist vorgesehen, dass die beiden Kontaktfahnen 33, 53 gemeinsam an einem der beiden Anschlussblöcke 6 festgelegt und damit elektrisch mit dem Anschlusskabel verbunden werden.

Ferner ist der Detaildarstellung der Figur 2 zu entnehmen, dass das erste Kontaktband 31 und das zweite Kontaktband 51 jeweils an mehreren Stellen mittels Punktschweißungen 40, 60 stoffschlüssig mit dem Schweißband 22 verbunden sind. Die Anordnung der Punktschweißungen 40, 60 ist rein exemplarisch so gewählt, dass unmittelbar angrenzend an die jeweiligen Kontaktfahnen 33, 34, 53, 54 eine zuverlässige elektrische Kontaktierung zwischen den Kontaktbändern 31, 51 und dem Schweißband 22 gegeben ist. Beispielhaft ist vorgesehen, dass jeweils an einer Position, die einen maximalen Abstand von den Kontaktfahnen 33, 34, 53, 54 aufweist, eine weitere Verbindung zum Schweißband 22 gegeben ist.

Wie der Darstellung der Figur 3 entnommen werden kann, handelt es sich beim Schweißband 22 und bei den beiden Kontaktbändern 31, 51 jeweils um Blechteile, die beispielsweise in einem Laserschneidvorgang oder in einem Wasserstrahlschneidvorgang aus einer ebenen Blechtafel, beispielsweise einem Edelstahlblech, ausgeschnitten werden können. Anschließend werden die Kontaktbänder 31, 51 noch plastisch deformiert, sodass die jeweiligen Kontaktfahnen 33, 34, 53, 54 jeweils senkrecht zu den Kontaktabschnitten 32, 52 ausgerichtet sind.

Ferner kann den Darstellungen der Figuren 1 bis 3 entnommen werden, dass die Geometrie des ersten Kontaktabschnitts 32 sowie des zweiten Kontaktabschnitts 52 derart gewählt sind, dass sie mit Ausnahme der jeweiligen Übergangsbereiche zu den Kontaktfahnen 33, 34, 53, 54 identisch zur Geometrie des Schweißbands 22 sind.

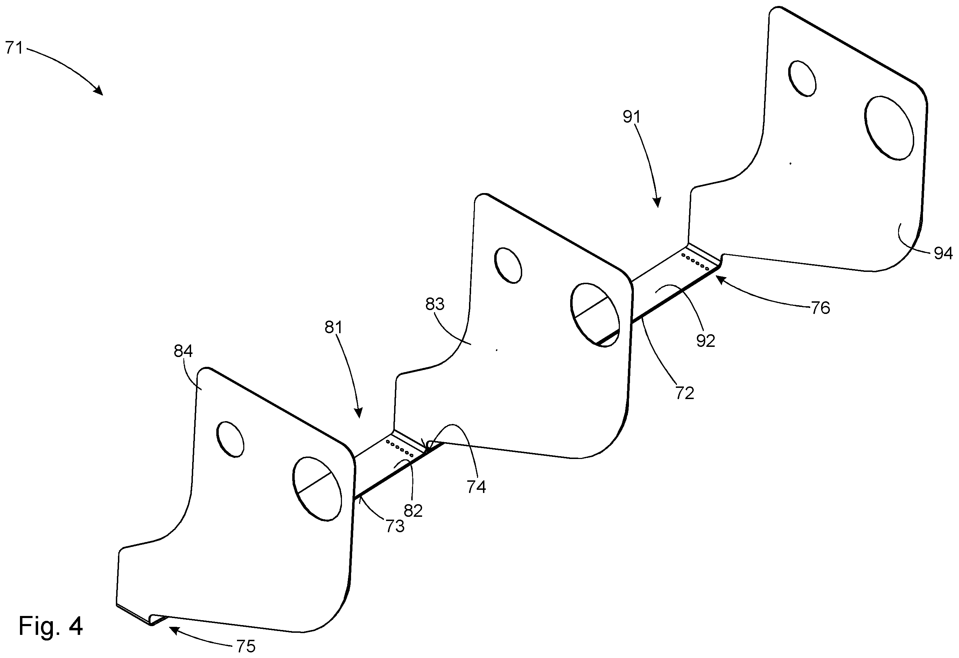

Bei einer zweiten Ausführungsform eines Widerstandsheizbands 71, wie sie in der Figur 4 dargestellt ist, ist das Schweißband 72 als geradliniger Streifen ausgebildet und ist an einer Oberseite 74 rein exemplarisch mit einem ersten Kontaktband 81 und einem zweiten Kontaktband 91 versehen. Jedes der Kontaktbänder 81, 91 weist einen Kontaktabschnitt 82, 92 sowie endseitig am jeweiligen Kontaktabschnitt 82, 92 angebrachte Kontaktfahnen 83, 84, 93, 94 auf. Dabei liegen die Kontaktfahnen 83 und 93 mit einander gegenüberliegenden Innenflächen 85, 95 flächig aneinander an und sind dazu vorgesehen, eine mittige Stromzufuhr für das Schweißband 72 zu ermöglichen. Hierbei wird ein symmetrischer Stromfluss zu den jeweils endseitig an den Kontaktabschnitten 82, 92 angeordneten Kontaktfahnen 83 bzw. 94 angestrebt. Dabei sind die Kontaktfahnen 84 bzw. 94 jeweils Endbereichen 75, 76 des Schweißbands 71 zugeordnet.

In gleicher Weise kann das Heizband auch mit vier oder mehr Anschlüssen versehen werden, die das Band in drei oder mehr bevorzugt gleiche Abschnitte teilen. Wie in Figur 4 dargestellt, kann das Heizband als gerader Streifen ausgebildet sein oder als offene Kontur, die Krümmungen in alle 3 Raumrichtungen beinhalten kann.

Die in der vorstehenden Beschreibung benutzten Zahlworte, beispielsweise "erste" und zweite", denen ausschließlich zur Unterscheidung der jeweils damit bezeichneten Komponenten und bedeuten nicht notwendigerweise, dass beispielsweise bei Erwähnung eines "zweiten" Elements auch zwingend ein "erstes" Element vorhanden sein muss.

## Patentansprüche

1. Widerstandsheizband (21; 71) zum Verschweißen von Kunststofffolien, mit einem elektrisch leitfähigen Schweißband (22; 72), das an einer Unterseite für einen flächigen Kontakt mit einer Kunststofffolie ausgebildet ist und das an einer der Unterseite (23; 73) abgewandten Oberseite (24; 74) von einem ersten Kontaktabschnitt (32; 82) eines elektrisch leitfähigen ersten Kontaktbands (31; 81) und von einem zweiten Kontaktabschnitt (52; 92) eines elektrisch leitfähigen zweiten Kontaktbands (51; 91) zumindest nahezu vollständig überdeckt ist, wobei eine erste Kontaktfahne (33; 83) des ersten Kontaktbands (31; 81) und eine erste Kontaktfahne (53; 93) des zweiten Kontaktbands (51; 91) in einer der Unterseite (23; 73) abgewandten Raumrichtung von der Oberseite (24; 74) abragen und flächig aneinander anliegen.

2. Widerstandsheizband (21; 71) nach Anspruch 1, **dadurch gekennzeichnet, dass** die erste Kontaktfahne (33; 83) und eine zweite Kontaktfahne (34; 84) des ersten Kontaktbands (31; 81) jeweils an einander entgegengesetzten Enden des ersten Kontaktabschnitts (32; 82) ausgebildet sind und dass die erste Kontaktfahne (53; 83) und eine zweite Kontaktfahne (54; 94) des zweiten Kontaktbands (51; 91) jeweils an einander entgegengesetzten Enden des zweiten Kontaktabschnitts (52; 92) ausgebildet sind.

3. Widerstandsheizband (21; 71) nach Anspruch 2, **dadurch gekennzeichnet, dass** die erste Kontaktfahne (33; 83) des ersten Kontaktbands (31; 81) einstückig und abgewinkelt am ersten Kontaktabschnitt (32; 82) ausgebildet ist und dass die erste Kontaktfahne (53; 93) des zweiten Kontaktbands (51; 51) einstückig und abgewinkelt am zweiten Kontaktabschnitt (52; 92) ausgebildet ist.

4. Widerstandsheizband (21; 71) nach Anspruch 2, **dadurch gekennzeichnet, dass** die erste Kontaktfahne (33; 83) des ersten Kontaktbands (31; 81) und die erste Kontaktfahne (53; 93) des zweiten Kontaktbands (51; 91) eine Einleitungsstelle für das Schweißband (22; 72) bestimmen, dass die zweite Kontaktfahne (34; 84) des ersten Kontaktbands (31; 81) eine erste Ausleitungsstelle bestimmt, dass die zweite Kontaktfahne (54; 93) des zweiten Kontaktbands (51; 91) eine zweite Ausleitungsstelle bestimmt und dass ein erster elektrischer Widerstand zwischen der Einleitungsstelle und der ersten Ausleitungsstelle einem zweiten elektrischen Widerstand zwischen der Einleitungsstelle und der zweiten Ausleitungsstelle gleicht.

5. Widerstandsheizband (21; 71) nach Anspruch 1, 2, 3 oder 4, **dadurch gekennzeichnet, dass** das Schweißband (22; 72) ringförmig ausgebildet ist, dass der erste Kontaktabschnitt (32; 82) als erster Ringabschnitt ausgebildet ist und dass der zweite Kontaktabschnitt (52; 92) als zweiter Ringabschnitt ausgebildet ist.

6. Widerstandsheizband (21; 71) nach Anspruch 5, **dadurch gekennzeichnet, dass** die zweite Kontaktfahne (34; 84) des ersten Kontaktbands (31; 81) und die zweite Kontaktfahne (54; 94) des zweiten Kontaktbands (51; 91) in einer der Unterseite (23; 83) abgewandten Raumrichtung von der Oberseite (24; 74) abragen und flächig aneinander anliegen.

7. Widerstandsheizband (21; 71) nach Anspruch 4, **dadurch gekennzeichnet, dass** das Schweißband (22; 72) einen ersten Endbereich (75) und einen beabstandet vom ersten Endbereich (75) angeordneten zweiten Endbereich (76) aufweist und dass die erste Ausleitungsstelle mit der zweiten Kontaktfahne (34; 84) des ersten Kontaktbands (31; 81) dem ersten Endbereich (75) zugeordnet ist, insbesondere rechtwinklig vom ersten Endbereich (75) abragt, und dass die zweite Ausleitungsstelle mit der zweiten Kontaktfahne (54; 94) des zweiten Kontaktbands (51; 91) dem zweiten Endbereich (76) zugeordnet ist, insbesondere rechtwinklig vom zweiten Endbereich (76) abragt.

8. Widerstandsheizband (21; 71) nach einem der vorhergehenden Ansprüche, **dadurch gekennzeichnet, dass** eine Projektion des ersten Kontaktabschnitts (32; 82) und eine Projektion des zweiten Kontaktabschnitts (52; 92) auf eine von der Unterseite des Schweißbands (22; 72) bestimmte Schweißfläche einer Projektion des Schweißbands (22; 72) auf die Schweißfläche entspricht.

9. Widerstandsheizband (21; 71) nach einem der vorhergehenden Ansprüche, **dadurch gekennzeichnet, dass** das Schweißband (22; 72), das erste Kontaktband (31; 81) und das zweite Kontaktband (51; 91) aus Edelstahl hergestellt sind und eine elektrische Leitfähigkeit von 1,4E6 S/m aufweisen und dass die erste Kontaktfahne (33; 83) des ersten Kontaktbands (31; 81) und die erste Kontaktfahne (53; 93) des zweiten Kontaktbands (51; 91) zumindest bereichsweise mit einer Beschichtung, insbesondere einer Kupferbeschichtung, versehen sind, die eine höhere elektrische Leitfähigkeit, insbesondere 5,8*10⁷S/m, als das Schweißband (22; 72), der erste Kontaktabschnitt (32; 82) und der zweite Kontaktabschnitt (52; 92) aufweist.

10. Widerstandsheizband (21; 71) nach Anspruch 9, **dadurch gekennzeichnet, dass** eine erste Innenfläche (41; 85) der ersten Kontaktfahne (33; 83) des ersten Kontaktbands (31; 81) und eine erste Innenfläche (61; 91) der ersten Kontaktfahne (53; 93) des zweiten Kontaktbands (51; 91) beschichtungsfrei ausgebildet sind.

11. Widerstandsheizband (21; 71) nach einem der vorhergehenden Ansprüche, **dadurch gekennzeichnet, dass** der erste Kontaktabschnitt (32; 82) des ersten Kontaktbands (31; 81) und der zweite Kontaktabschnitt (52; 92) des zweiten Kontaktbands (51; 91) zumindest bereichsweise stoffschlüssig mit der Oberseite (24; 74) des Schweißbands (22; 72) verbunden sind.
